# EUROPÄISCHE PATENTSCHRIFT

(11) **EP 1 731 662 B1**
(45) Veröffentlichungstag und Bekanntmachung des Hinweises auf die Patenterteilung: **02.04.2008**
(21) Anmeldenummer: 06010936.0
(22) Anmeldetag: 26.05.2006
(51) Int. Cl.: D21B 1/32

(54) **Verfahren und Vorrichtung zum Wiederaufbereiten von Altpapier**
Process and apparatus for reuse of waste paper
Procédé et apparaeil pour la récupération des vieux papiers

(30) Priorität: 06.06.2005 AT 9562005
(43) Veröffentlichungstag der Anmeldung: 13.12.2006
(73) Patentinhaber: Andritz AG, 8045 Graz (AT)
(72) Erfinder: Hertl, Erwin, Ing., 811 Judendorf (AT); Sket, Peter, 8101 Gratkorn (AT)
(74) Vertreter: Schweinzer, Friedrich

(56) Entgegenhaltungen:
- EP-A- 0 615 020
- EP-A- 0 653 510
- DE-A1- 10 256 519
- US-A- 4 332 638

## Beschreibung

Die Erfindung betrifft ein Verfahren zum Wiederaufbereiten von Altpapier, bei dem in einer Auflösungsstufe Altpapier aufgelöst wird, der aufgelöste Faserstoffstrom anschließend einer ersten Flotation, einer Feinsortierung, einer ersten Mittelkonsistenz-Eindickung, einer Hochkonsistenz-Eindickung, einer Dispergierung sowie einer weiteren Flotation und einer weiteren Mittelkonsistenz-Eindickung unterzogen wird, wobei nach der ersten Flotation wenigstens ein Teil des Faserstoffstromes einer Fraktionierung zugeführt wird, und wobei ein Teil des fraktionierten Faserstoffstromes dem Hauptverfahren zurückgeführt und der andere Teil parallel zum Hauptverfahren weitergeführt wird.

Die Erfindung betrifft des weiteren eine Vorrichtung zum Wiederaufbereiten von Altpapier, mit einer Auflösungsstufe zum Auflösen von Altpapier, daran anschließend in einer Hauptleitung (28) eine erste Flotationsstufe, eine Feinsortierungsstufe, eine erste Mittelkonsistenz-Eindickungsstufe, eine Hochkonsistenz-Eindickungsstufe, eine Dispergierungsstufe, eine weitere Flotationsstufe und eine weitere Mittelkonsistenz-Eindickungsstufe, in welchen der aufgelöste Faserstoffstrom behandelt wird, und mit einer Fraktionierstufe, die nach der ersten Flotationsstufe angeordnet ist, wobei ein Ausgang der Fraktionierstufe zur Hauptleitung zurückführt, und der andere Ausgang der Fraktionierstufe in einer Leitung parallel zur Hauptleitung und zu weiteren Stufen weiterführt,

Die Erfindung betrifft insbesondere die Wiederaufbereitung von Altpapier zu hochwertigem Papier. Bei derartigen bekannten Verfahren wird der gesamte Faserstoffstrom durch alle genannten notwendigen Prozessschritte des Hauptverfahrens geführt. Besonders kostenintensiv sind dabei sowohl von den Anlagenkosten und den Betriebskosten die Eindickprozesse (Eindicker, Filter, Pressen) sowie die Dispergierung.

Aus der Wiederaufbereitung von Altpapier für Verpackungspapiere, z.B. Kartonagen, ist es bekannt, den Faserstoffstrom zu fraktionieren und die aus dem Hauptverfahren abgetrennte Teilfraktion gesondert weiter zu behandeln und weiteren Herstellungsprozessen für Papierprodukte oder dergleichen zuzuführen.

Die DE10256519 und EP0653510 offenbaren ein Verfahren bei dem der gesamte Altpapierstrom durch die Fraktionierung geführt werden muss, bevor er in Teilströme aufgeteilt wird, dies erfordert eine große und leistungsstarke Fraktionierungseinheit.

Ziel der Erfindung ist es ein Verfahren und eine Vorrichtung zum Herstellen hochwertiger Faserstoffsuspensionen zur Verfügung zu stellen, bei dem mit im wesentlichen gleich gutem Ergebnis, sowohl die Anlagekosten als auch die Betriebskosten verringert werden können.

Gelöst wird diese Aufgabe bei einem gattungsgemäßen Verfahren dadurch, dass nach einer ersten Flotation ein Teil des Faserstoffstromes einer Fraktionierung zugeführt wird, wobei ein Teil des fraktionierten Faserstoffstromes dem Hauptverfahren zurückgeführt und der andere Teil parallel zum Hauptverfahren weitergeführt wird, wobei die parallel weitergeführte Teilfraktion nach der Dispergierung in das Hauptverfahren zurückgeführt wird.

Diese Aufgabe wird des weiteren mit einer gattungsgemäßen Vorrichtung gelöst, die dadurch gekennzeichnet ist, dass eine Fraktionierstufe über eine Leitung mit der Hauptleitung verbunden und nach einer ersten Flotationsstufe angeordnet ist, wobei ein Ausgang der Fraktionierstufe zur Hauptleitung zurückführt, und der andere Ausgang der Fraktionierstufe in einer Leitung parallel zur Hauptleitung weiterführt, und dass die parallele Leitung nach der Dispergierungsstufe in die Hauptleitung zurückführt.

Die Erfindung macht sich zu nutze, dass die Fraktion, die nicht ins Hauptverfahren zurückgeführt sondern zunächst parallel zu diesem weitergeführt wird, nicht notwendiger Weise einer Eindickung und Dispergierung unterzogen werden muss. Da somit der Faserstoffstrom im Hauptverfahren um die Teilfraktion kleiner ist, können in entsprechendem Ausmaß sowohl die Anlagengröße als auch die Betriebskosten bei der Eindickung und Dispergierung entsprechend reduziert werden.

Es ist an sich bekannt, nach der Dispergierung im Hauptverfahren eine Bleiche des Faserstoffstromes durchzuführen. In diesem Fall besteht beim erfindungsgemäßen Verfahren die Möglichkeit, die Teilfraktion erst nach dieser Bleiche in das Hauptverfahren zurückzuführen. Dies ist deswegen möglich, weil sich in der Teilfraktion ein relativ kleiner Anteil an Stoffen befindet, die gebleicht werden können, sodass auch die erste Bleiche ohne nennenswerten Qualitätsverlust umgangen werden kann.

Eine weitere bevorzugte Durchführungsform des Verfahrens ist dadurch gekennzeichnet, dass die Teilfraktion einer Mittelkonsistenz-Eindickung und einer Bleiche unterzogen wird, und dass die gebleichte Teilfraktion dem Hauptverfahren nach der weiteren Flotation zugeführt wird.

Die Vorrichtung mit der dieses Verfahren ausgeführt werden kann, ist bevorzugt dadurch gekennzeichnet, dass in der parallelen Leitung eine Mittelkonsistenz-Eindickungsstufe und eine Bleichstufe vorgesehen sind, und dass die parallele Leitung nach der weiteren Flotationsstufe in die Hauptleitung mündet.

Bei dieser Ausführungsform wird die Teilfraktion noch später dem Hauptverfahren zurückgeführt, nämlich erst nach der weiteren Flotation. In diesem Fall ist es aber angebracht auch die Teilfraktion zu bleichen, wenn eine ausreichend hohe Qualität des Faserstoffstromes erzielt werden soll. Natürlich muss vor der Bleiche der Teilfraktion noch eine Mittelkonsistenz-Eindickung durchgeführt werden.

Weitere bevorzugte Ausführungsformen sind Gegenstand der übrigen Unteransprüche.

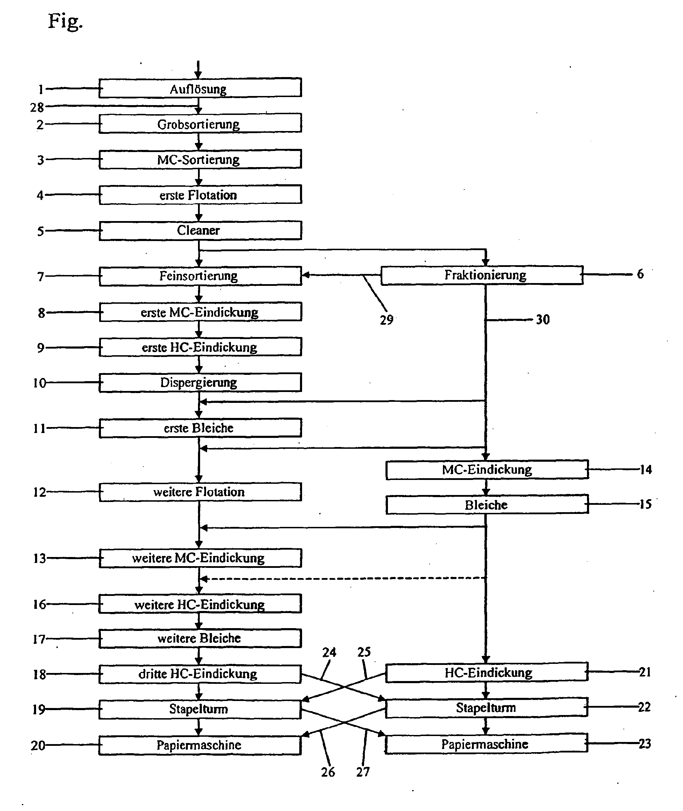

Nachfolgend werden bevorzugte Durchführungsformen des erfindungsgemäßen Verfahrens mit Bezug auf die angeschlossene Zeichnung beschrieben.
Bei dem in der Zeichnung schematisch dargestellten, erfindungsgemäßen Verfahren bzw. der nur symbolhaft dargestellten Vorrichtung zum Wiederaufbereiten von Altpapier für eine hochwertige Wiederverwendung wird in einer ersten Auflösungsstufe 1 ein Faserstoffstrom erzeugt. Daran anschließend folgt in einer Hauptleitung 28 eine Grobsortierungsstufe 2, welcher der Faserstoffstrom zugeführt wird. Bevorzugt ist in der Hauptleitung 28 nach der Grobsortierung 2 eine Mittelkonsistenz-Feinsortierung 3 des Faserstoffstromes bei ca. 3 bis 5 Prozent vorgesehen.

In einem weiteren Verfahrensschritt 4 wird der Faserstoffstrom einer ersten Flotation unterzogen und anschließend bei Bedarf einer Reinigungsstufe 5.

Bis hier entspricht das Hauptverfahren den aus dem Stand der Technik bekannten Verfahren. Erfindungsgemäß wird nun allerdings entweder ein Teil oder der gesamt Faserstoffstrom einer Fraktionierung 6 zugeführt, wobei der Faserstoffstrom in zwei Teilfraktionen getrennt wird. Die sogenannte "Langfaser-Fraktion" wird über eine Leitung 29 zum Hauptverfahren und dort einer Feinsortierung 7 zurückgeführt, ebenso wie ein möglicher Anteil des Faserstoffstromes, welcher der Fraktionierung 6 überhaupt nicht sondern von der Reinigungsstufe 5 durch die Hauptleitung 28 direkt der Feinsortierung 7 zugeführt wurde.

Im Hauptverfahren folgt nach der Feinsortierung 7 in der Regel eine erste Mittelkonsistenz-Eindickung 8, und eine erste Hochkonsistenz-Eindickung 9, sowie eine Dispergierung 10.

Auf die Dispergierung 10 folgt bei Bedarf eine erste Bleiche 11 sowie zwingend eine zweite Flotation 12, auf welche eine weitere Mittelkonsistenz-Eindickung 13 folgt.

Die zweite Teilfraktion aus der Fraktionierung 6, die als "Kurzfaser-Fraktion" bezeichnet wird, wird in einer Leitung 30 parallel zum Hauptverfahren bzw. zur Hauptleitung 28 weitergeführt und in einer ersten Ausführungsform der Erfindung nach der Dispergierung 10 in das Hauptverfahren zurückgeführt. Je nach dem wie groß der Anteil des Faserstoffstromes ist, der der Fraktionierung 6 zugeführt wurde, und in welchem Verhältnis die Fraktionierung selbst durchgeführt wird, wird das Hauptverfahren durch die parallel dazu geführte Teilfraktion entlastet, sodass sowohl die Anlagekosten als auch die Betriebskosten in den Verfahrenstufen 7 bis 10 des Hauptverfahrens kleiner bzw. kostengünstiger ausgeführt werden können.

In einer alternativen Ausführungsform wird die Teilfraktion nicht bereits nach der Dispergierung 10 sondern erst nach der ersten Bleiche 11 zugeführt. Die Qualitätsverschlechterung durch das Zurückführen erst nach der ersten Bleiche 11 ist aus dem Grund relativ gering, da der Anteil der Teilfraktion, welcher gebleicht werden kann, erfahrungsgemäß relativ gering ist.

Bei Bedarf kann auch bereits ein Anteil der Teilfraktion nach der Dispergierung 10 und ein weiterer Anteil nach der Bleiche 11 in das Hauptverfahren zurückgeführt werden.

In einer weiteren bzw. alternativen Durchführungsform der Erfindung kann des weiteren vorgesehen sein, dass die Teilfraktion oder ein Teil dieser erst nach der weiteren Flotation 12 in das Hauptverfahren zu-rückgeführt wird. In diesem Fall wird die Teilfraktion allerdings vor der Rückführung in das Hauptverfahren einer Mittelkonsistenz-Eindickung 14 und einer nachfolgenden Bleiche 15 unterzogen.

Diese Ausführungsform des Verfahrens ermöglicht eine Entlastung des Hauptverfahrens in erheblichem Ausmaße, ohne dass eine Qualitätsverminderung des mit dem erfindungsgemäßen Verfahren herzustellenden Faserstoffstroms in Kauf genommen werden muss.

Da bereits eine Mittelkonsistenz-Eindickung 14 der Teilfraktion durchgeführt wurde, besteht auch die Möglichkeit, die eingedickte und gebleichte Teilfraktion erst nach der weiteren Mittelkonsistenz-Eindickung 13 in das Hautpverfahren zurückzuführen.

Anschließend kann das Hauptverfahren, wie aus dem Stand der Technik an sich bekannt, weiter ausgeführt werden. D.h. es kann eine weitere Hochkonsistenz-Eindickung 16 eine weitere Bleiche 17, eine dritte Hochkonsistenz-Eindickung 18 und ein sogenannter Stapelturm 19, d.h. ein Pufferspeicher für die wiederaufbereitete Faserstoffsuspension vorgesehen sein, worauf diese einer Papiermaschine 20 oder anderen geeigneten Weiterverarbeitungsanlagen zugeführt wird.

Grundsätzlich wäre es auch möglich, die Teilfraktion oder Teile dieser noch nicht hier dem Hauptverfahren zurückzuführen, sondern auch die Teilfraktion einer Hochkonsistenz-Eindickung 21, einem Stapelturm bzw. Pufferspeicher 22 und einer weiteren Papiermaschine oder sonstigen Verarbeitungseinrichtung 23 zuzuführen. In diesem Fall ist es möglich, dass Teilströme wechselseitig zwischen Hauptverfahren und Teilfraktion zugeführt werden, wie durch die Pfeile 24 bis 27 angedeutet ist.
Zusammenfassend kann ein Ausführungsbeispiel der Erfindung wie folgt dargestellt werden:
Bei einem Verfahren und einer Vorrichtung zum Wiederaufbereiten von Altpapier, wird zuerst in einer Auflösungsstufe 1 Altpapier aufgelöst. Der aufgelöste Faserstoffstrom wird anschließend einer ersten Flotation 4, einer Feinsortierung 7, einer ersten Mittelkonsistenz-Eindickung 8, einer Hochkonsistenz-Eindickung 9, einer Dispergierung 10 sowie einer weiteren Flotation 12 und einer weiteren Mittelkonsistenz-Eindickung 13 unterzogen. Nach der ersten Flotation 4 wird wenigstens ein Teil des Faserstoffstromes einer Fraktionierung 6 zugeführt, wobei ein Teil des fraktionierten Faserstoffstromes dem Hauptverfahren zurückgeführt und der andere Teil in einer Leitung 30 parallel zum Hauptverfahren weitergeführt wird. Die parallel weitergeführte Teilfraktion wird nach der Dispergierung 10 in das Hauptverfahren zurückgeführt.
Da somit der Faserstoffstrom im Hauptverfahren um die Teilfraktion kleiner ist, können in entsprechendem Ausmaß sowohl die Anlagengröße als auch die Betriebskosten bei der Eindickung 8, 9 und der Dispergierung 10 entsprechend reduziert werden.

## Patentansprüche

1. Verfahren zum Wiederaufbereiten von Altpapier, bei dem in einer Auflösungsstufe Altpapier aufgelöst wird, der aufgelöste Faserstoffstrom anschließend einer ersten Flotation, einer Feinsortierung, einer ersten Mittelkonsistenz-Eindickung, einer Hochkonsistenz-Eindickung, einer Dispergierung sowie einer weiteren Flotation und einer weiteren Mittelkonsistenz-Eindickung unterzogen wird, **dadurch gekennzeichnet, dass** nach der ersten Flotation ein Teil des Faserstoffstromes einer Fraktionierung zugeführt wird und ein anderer Teil im Hauptstrom weitergeführt wird, und wobei ein Teil des fraktionierten Faserstoffstromes dem Hauptverfahren zurückgeführt und der andere Teil parallel zum Hauptverfahren weitergeführt wird, und die parallel weitergeführte Teilfraktion nach der Dispergierung in das Hauptverfahren zurückgeführt wird.

2. Verfahren nach Anspruch 1, **dadurch gekennzeichnet, dass** im Hauptverfahren nach der Dispergierung eine erste Bleiche durchgeführt wird und dass die Teilfraktion nach der Bleiche in das Hauptverfahren zurückgeführt wird.

3. Verfahren nach Anspruch 1, **dadurch gekennzeichnet, dass** die Teilfraktion einer Mittelkonsistenz-Eindickung und einer Bleiche unterzogen wird, und dass die gebleichte Teilfraktion dem Hauptverfahren nach der weiteren Flotation zugeführt wird.

4. Verfahren nach Anspruch 3, **dadurch gekennzeichnet, dass** im Hauptverfahren nach der weiteren Mittelkonsistenz-Eindickung eine weitere Hochkonsistenz-Eindickung und/oder eine weitere Bleiche vorgesehen sind, und dass die gebleichte Teilfraktion nach der Hochkonsistenz-Eindickung und/oder der weiteren Bleiche dem Hauptverfahren zugeführt wird.

5. Verfahren nach Anspruch 4, **dadurch gekennzeichnet, dass** der Faserstoffstrom im Hauptverfahren und der Faserstrom der Teilfraktion jeweils einer weiteren Hochkonsistenz-Eindickung zugeführt und dann zusammengeführt werden.

6. Vorrichtung zum Wiederaufbereiten von Altpapier, mit einer Auflösungsstufe zum Auflösen von Altpapier, daran anschließend in einer Hauptleitung (28) eine erste Flotationsstufe (4), eine Feinsortierungsstufe (7), eine erste Mittelkonsistenz-Eindickungsstufe (8), eine Hochkonsistenz-Eindickungsstufe (9), eine Dispergierungsstufe (10), eine weitere Flotationsstufe (12) und eine weitere Mittelkonsistenz-Eindickungsstufe (13), in welchen der aufgelöste Faserstoffstrom behandelt wird, und mit einer Fraktionierstufe (6), **dadurch gekennzeichnet, dass** nach der ersten Flotationsstufe (4) ein Abzweig von der Hauptleitung angeordnet ist und dieser Abzweig mit der Fraktionierungsstufe verbunden ist, wobei ein Ausgang (29) der Fraktionierstufe (6) zur Hauptleitung (28) zurückführt, und der andere Ausgang der Fraktionierstufe (6) in einer Leitung (30) parallel zur Hauptleitung (28) weiterführt, und dass die parallele Leitung (30) nach der Dispergierungsstufe (10) in die Hauptleitung (28) zurückführt.

7. Vorrichtung nach Anspruch 6, **dadurch gekennzeichnet, dass** in der Hauptleitung (28) nach der Dispergierungsstufe (10) eine erste Bleichstufe (11) angeordnet ist und dass die parallele Leitung (30) nach der Bleichstufe (11) in die Hauptleitung (28) mündet.

8. Vorrichtung nach Anspruch 6, **dadurch gekennzeichnet, dass** in der parallelen Leitung (30) eine Mittelkonsistenz-Eindickungsstufe (14) und eine Bleichstufe (15) vorgesehen sind, und dass die parallele Leitung (30) nach der weiteren Flotationsstufe (12) in die Hauptleitung (28) mündet.

9. Vorrichtung nach Anspruch 8, **dadurch gekennzeichnet, dass** in der Hauptleitung (28) nach der weiteren Mittelkonsistenz-Eindickungsstufe (13) eine weitere Hochkonsistenz-Eindickungsstufe (16) und/oder eine weitere Bleichstufe (17) vorgesehen sind, und dass die parallele Leitung (30) nach der weiteren Mittelkonsistenz-Eindickungsstufe (13) und/oder der weiteren Bleichstufe (17) in die Hauptleitung (28) mündet.

10. Vorrichtung nach Anspruch 9, **dadurch gekennzeichnet, dass** in der Hauptleitung (28) nach der weiteren Hochkonsistenz-Eindickung (16) eine weitere Hochkonsistenz-Eindickung (18) vorgesehen ist und dass in der parallelen Leitung (30) nach der Bleichstufe (15) eine weitere Hochkonsistenz-Eindickung (21) vorgesehen ist, wobei die Hauptleitung (28) und die parallele Leitung (30) nach den weiteren Eindickern (18, 21) zusammengeführt werden.

## Claims

1. Process for preparation of waste paper, where the waste paper is dissolved in a pulping stage, the dissolved pulp stream then undergoes a first flotation, fine screening, first medium-consistency thickening, high-consistency thickening, dispersion, further flotation and further medium-consistency thickening, **characterized by** a part of the pulp stream being routed to fractionation after the first flotation and another part of the pulp stream being routed in the main stream, and wherein a part of the fractionated pulp stream is led back to the main process and the other part is routed in parallel to the main process and the parallel partial fraction is led back to the main process after dispersing.

2. Process according to claim 1, **characterized by** a first bleaching being carried out in the main process after dispersing and the partial fraction being led back to the main process after bleaching.

3. Process according to claim 1, **characterized by** the partial fraction undergoing medium-consistency thickening and bleaching, and by the bleached partial fraction being led to the main process after further flotation.

4. Process according to claim 3, **characterized by** a further high-consistency thickening and/or bleaching being provided in the main process after the further medium-consistency thickening, and by the bleached partial fraction being led to the main process after high-consistency thickening and/or further bleaching.

5. Process according to claim 4, **characterized by** the pulp stream in the main process and the pulp stream in the partial fraction being each led to further high-consistency thickening and then being united.

6. Device for preparation of waste paper, with a pulping stage for dissolving waste paper, followed by a first flotation stage (4) in a main pipe (28), a fine screening stage (7), a first medium-consistency thickening stage (8), a high-consistency thickening stage (9), a dispersing stage (10), a further flotation stage (12) and a further medium-consistency thickening stage (13) in which the dissolved pulp stream is treated, and with a fractionation stage (6), **characterized by** a branch-off from the main pipe being arranged after the first flotation stage (4) and this branch-off being connected to the fractionation stage, with an outlet (29) of the fractionation stage (6) leading back to the main pipe (28) and the other outlet of the fractionation stage (6) continuing in a pipe (30) parallel to the main pipe (28), and the parallel pipe (30) leading back to the main pipe (28) after the dispersing stage (10).

7. Device according to claim 6, **characterized by** a first bleaching stage (11) being arranged in the main pipe (28) after the dispersing stage (10) and by the parallel pipe (30) leading into the main pipe (28) after the bleaching stage (11).

8. Device according to claim 6, **characterized by** a medium-consistency thickening stage (14) and a bleaching stage (15) being provided in the parallel pipe (30), and by the parallel pipe (30) leading into the main pipe (28) after the further flotation stage (12).

9. Device according to claim 8, **characterized by** a further high-consistency thickening stage (16) and/or a further bleaching stage (17) being provided in the main pipe (28) after the further medium-consistency thickening stage, and by the parallel pipe (30) leading into the main pipe (28) after the further medium-consistency thickening stage (13) and/or further bleaching stage (17).

10. Device according to claim 9, **characterized by** a further high-consistency thickening stage (18) being provided in the main pipe (28) after the further high-consistency thickening stage (16) and by a further high-consistency thickening stage (21) being provided in the parallel pipe (30) after the bleaching stage (15), with the main pipe (28) and the parallel pipe (30) being united after the further thickeners (18, 21).

## Revendications

1. Procédé de préparation de vieux papiers, où les vieux papiers sont désintégrés dans un étage pulpeur, le courant de vieux papiers désintégrés étant à la suite soumis à une première flottation, un triage précis, un premier épaississement à moyenne concentration, un épaississement à haute concentration, une dispersion, une flottation ultérieure et un épaississement ultérieur à moyenne concentration, **caractérisé en ce qu'**une partie du courant de pâte est menée à un fractionnement après la première flottation et une autre partie du courant de pâte est menée dans le courant principal, et où une partie du courant de pâte fractionné est renvoyée au procédé principal, l'autre partie est menée en parallèle au procédé principal et la fraction partielle menée en parallèle est renvoyée au procédé principal après la dispersion.

2. Procédé selon la revendication 1, **caractérisé en ce qu'**un premier blanchiment est effectué dans le procédé principal après la dispersion et que le courant partiel est renvoyé au procédé principal après le blanchiment.

3. Procédé selon la revendication 1, **caractérisé en ce que** le courant partiel est soumis à un épaississement à moyenne concentration et un blanchiment et que le courant partiel blanchi est mené vers le procédé principal après la flottation ultérieure.

4. Procédé selon la revendication 3, **caractérisé en ce qu'**un épaississement ultérieur à haute concentration et/ou un blanchiment ultérieur sont prévus dans le procédé principal après l'épaississement ultérieur à moyenne concentration, et que le courant partiel blanchi est mené vers le procédé principal après l'épaississement à haute concentration et/ou le blanchiment ultérieur.

5. Procédé selon la revendication 4, **caractérisé en ce que** le courant de pâte dans le procédé principal et le courant de pâte dans le courant partiel est chacun mené à un épaississement ultérieur à haute concentration et sont ensuite réunis.

6. Dispositif de préparation de vieux papiers, avec un étage pulpeur pour la désintégration des vieux papiers, suivi par un premier étage de flottation (4) dans un tuyau principal (28), un étage de triage fin (7), un premier étage d'épaississement à moyenne concentration (8), un étage d'épaississement à haute concentration (9), un étage de dispersion (10), un étage de flottation ultérieure (12) et un étage d'épaississement ultérieur à moyenne concentration (13), où le courant de pâte désintégré est traité, et comportant un étage de fractionnement (6), **caractérisé en ce qu'**un branchement du tuyau principal est disposé après le premier étage de flottation (4) et que ce branchement est connecté à l'étage de fractionnement, une sortie (29) de l'étage de fractionnement (6) reconduisant au tuyau principal (28) et l'autre sortie de l'étage de fractionnement (6) continuant dans un tuyau en parallèle (30) au tuyau principal (28), et que le tuyau en parallèle (30) reconduit au tuyau principal (28) après l'étage de dispersion (10).

7. Dispositif selon la revendication 6, **caractérisé en ce qu'**u premier étage de blanchiment (11) est disposé dans le tuyau principal (28) après l'étage de dispersion (10) et le tuyau en parallèle (30) débouche sur le tuyau principal (28) après l'étage de blanchiment (11).

8. Dispositif selon la revendication 6, **caractérisé en ce qu'**un étage de d'épaississement à moyenne concentration (14) et un étage de blanchiment (15) sont prévus dans le tuyau en parallèle (30), et que le tuyau en parallèle (30) débouche sur le tuyau principal (28) après l'étage de flottation ultérieure (12).

9. Dispositif selon la revendication 8, **caractérisé en ce qu'**un étage d'épaississement ultérieur à haute concentration (16) et/ou un étage de blanchiment ultérieur (17) est prévu dans le tuyau principal (28) après l'étage d'épaississement ultérieur à moyenne concentration, et que le tuyau en parallèle (30) débouche sur le tuyau principal (28) après l'étage d'épaississement ultérieur à moyenne concentration (13) et/ou l'étage de blanchiment ultérieur (17).

10. Dispositif selon la revendication 9, **caractérisé en ce qu'**un étage d'épaississement ultérieur à haute concentration (18) est prévu dans le tuyau principal (28) après l'étage d'épaississement ultérieur à haute concentration (16) et qu'un étage d'épaississement ultérieur à haute concentration (21) est prévu dans le tuyau en parallèle (30) après l'étage de blanchiment (15), le tuyau principal (28) et le tuyau en parallèle (30) étant réunis après les épaississeurs ultérieurs (18, 21).
